(19) Europäisches Patentamt / European Patent Office / Office européen des brevets

(11) **EP 4 437 266 B1**

(12) **EUROPEAN PATENT SPECIFICATION**

(45) Date of publication and mention
of the grant of the patent:
**17.09.2025   Bulletin 2025/38**

(21) Application number: **22813759.2**

(22) Date of filing: **24.11.2022**

(51) International Patent Classification (IPC):
**F17D 5/06** (2006.01)

(52) Cooperative Patent Classification (CPC):
**F17D 5/06; G01M 3/243; G01M 3/2807**

(86) International application number:
**PCT/IB2022/061402**

(87) International publication number:
**WO 2023/095058 (01.06.2023 Gazette 2023/22)**

(54) **PROCESS AND INTEGRATED SYSTEM FOR CONTINUOUS MONITORING OF A PIPELINE WITH PRESSURIZED FLUID**

VERFAHREN UND INTEGRIERTES SYSTEM ZUR KONTINUIERLICHEN ÜBERWACHUNG EINER ROHRLEITUNG MIT UNTER DRUCK STEHENDEM FLUID

PROCÉDÉ ET SYSTÈME INTÉGRÉ POUR LA SURVEILLANCE EN CONTINU D'UNE CANALISATION DE FLUIDE SOUS PRESSION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.11.2021   IT 202100029993**

(43) Date of publication of application:
**02.10.2024   Bulletin 2024/40**

(73) Proprietor: **ENIVIBES S.r.l.**
**20055 Vimodrone (MI) (IT)**

(72) Inventors:
 • **GIUNTA, Giuseppe**
  **20097 San Donato Milanese (MI) (IT)**

• **SERENA, Alessandro**
  **20097 San Donato Milanese (MI) (IT)**
• **BERNASCONI, Giancarlo**
  **21046 Malnate (VA) (IT)**
• **DEL GIUDICE, Silvio**
  **22060 Novedrate (CO) (IT)**

(74) Representative: **Bottero, Carlo et al**
  **Barzanò & Zanardo S.p.A.**
  **Via Borgonuovo, 10**
  **20121 Milano (IT)**

(56) References cited:
**WO-A1-2014/096019      CN-B- 110 792 928**
**US-A1- 2013 066 568      US-B2- 8 346 492**

**Description**

**TECHNICAL FIELD**

The present invention relates to a process and an integrated system for implementing continuous remote monitoring of a pipeline transporting pressurized fluids. The transported fluids can also be multiphase, such as natural gas, crude oil, petroleum products, water, $CO_2$, hydrogen, mixtures of liquids and gases (multiphase) and similar. Such pipelines can be preferably used as medium- and long-distance gas pipelines, oil pipelines or aqueducts.

**PRIOR ART**

Various processes and systems for continuous remote monitoring of systems with pressurized pipelines are known, especially for detecting, localising and, possibly, classifying any fluid escape points or leaks.

Some systems known as Software-Based Leak Detection Systems (SW-Based LDS) (see American Petroleum Institute, API 1130, 2002), perform leak detection through complex processing of signals from a limited set of sensors in the field.

A known processing method among SW-Based LDSs is based on "negative pressure waves" (NP: Negative Pressure), in which negative pressure variations that are generated by a leak and that propagate in the fluid starting from the leak location in both directions are identified and analyzed.

Other known methods are based on a "mass balance" (MB): in this case, a leak is identified by monitoring the difference between the fluid mass entering the pipeline at one end and the fluid mass exiting at the opposite end.

A further known method is based on the identification of the acoustic noise (AN) produced by the fluid exiting through the leak outlet hole.

These methods are described, for example, in Henrie, Morgan et al., Pipeline Leak Detection Handbook, Elsevier, 2016.

Each method of known type generally measures specific quantities and parameters and processes the detected quantities based on the peculiarity of the method.

The article "SYNERGY IN LEAK DETECTION: COMBINING LEAK DETECTION TECHNOLOGIES THAT USE DIFFERENT PHYSICAL PRINCIPLES" by Peter Y. Han, P., Kim, M., Proceedings of the 2014 10th International Pipeline Conference, IPC2014, Canada, describes the synergies that are achieved by integrating leak monitoring systems based on different physical principles. The system and the method described in United States Patent US8,346,492B2 by Yang et al., January 01, 2013, use pressure sensors, which are in contact with the fluid and measure the acoustic noise in the fluid itself, and strain gauges that are positioned and arranged in a matrix on the outer surface of the pipelines. A central processing unit makes it possible to process the acoustic signals detected by the pressure sensors and the strain gauge measurements and to validate any leaks by comparing the detected data with the appropriately stored historical data profiles. Two different monitoring systems are therefore used to exploit their complementarity and to increase the identifiable anomalous scenarios.

Also known is United States Patent Application US2013066568A1 by Alonso Julio Roberto, April 12, 2011, which describes a signal processing via an artificial neural network and the use of an Acoustic Noise (AN) diagnostic method and a Mass Balance (MB) diagnostic method to detect and validate leaks in a pipeline. The proposed solution has no embodiment examples and is difficult to implement.

Also known is United States Patent US10,094,732B2 by Linford owned by Syrinix LTD, October 09, 2018, which describes a system for detecting leaks in the pipelines based on vibroacoustic measurements collected along a section of the pipeline and sent to a central unit. When the central unit detects a variation in pressure compatible with a leak, the data of a (ultrasonic) flow meter connected with the same central unit that validates the alarm or not is also analyzed. The described system validates the data detected by a method of the Negative Pressure (NP) type with the flow data of the flow meters.

Basically, the systems of the known type propose to use each diagnostic method independently of the others and to jointly process the outputs. The detection of a leak by a first method is validated or not by a second method, while complex strategies of choice are defined when the different outputs are conflicting with each other.

The main task of this invention is to solve the technical problems highlighted by eliminating the drawbacks referred to in the aforementioned known technique by devising a process and a system that allows the use of different methods for detecting leaks to carry out continuous monitoring of the entire system, i.e. pipelines and equipment used, through an effective integration of partial data among the various methods and the possibility of reprocessing common data, increasing the accuracy and the reliability of the data collected and also of the data associated with any leaks.

**Brief summary of the invention**

The object of the present invention is a process for continuous remote monitoring of a pipeline with transported pressurized fluid according to claim 1. Other preferred embodiments of the process are described by the dependent claims.

An integrated monitoring system according to claim 7 and according to the dependent claims is also an object of the invention.

The characteristics and the advantages of the process and of the integrated system according to the present invention will result from the description, made below, of embodiments given by way of non-limiting example with reference to the attached drawings.

**Brief description of the drawings**

In these figures:

- Figure 1 illustrates, in a schematic form, an integrated system according to the present invention;
- Figure 2 illustrates, in a schematic and general form, some steps of the process according to the present invention in an embodiment;
- Figures 3 and 4 illustrate two graphical representations relating to ROC curves referring to a first (LDS1) and a second diagnostic method for detecting leaks (LDS2);
- Figures 5 and 6 illustrates, in a schematic way, a system and a process in a further embodiment;
- Figure 7 illustrates in a single diagram two curves relating to the propagation times of the pressure transients from a station A to a station B ($t_{AB}$ dashed line) and vice versa ($t_{BA}$ continuous line);
- Figure 8 illustrates, in schematic form, a curve that represents the relationship between errors in estimating the mass leak of fluid with respect to the errors made in estimating the velocity of the sound in the fluid;
- Figure 9 illustrates some steps of the process according to the present invention in a further embodiment;
- Figure 10 illustrates, in a schematic way, the velocity of the sound as a function of time in a pipeline with pressurized fluid obtained by processing the data of a first and of a second flow meter that are arranged at respective points A and B of a pipeline;
- Figure 11 illustrates, in a schematic way, the relationship between the errors in estimating the density of the fluid as a function of the errors in estimating a parameter K;
- Figures 12 and 13 illustrates, in a schematic way, a system and a process in a further embodiment;
- Figure 14 illustrates in a space-time diagram the pressure difference detected by four measuring stations of a system made according to Figure 12;
- Figure 15 illustrates the estimated fluid leak according to the present invention and relating to the system of Figure 12;
- Figures 16 and 17 illustrate, respectively, the pressure difference and the density difference as a function of the time calculated for a system made according to the diagram of Figure 12;
- Figure 18 illustrates an estimate of the leaks or MPR - Mass Packing Rate - relating to the example of Figure 12.

**DETAILED DESCRIPTION**

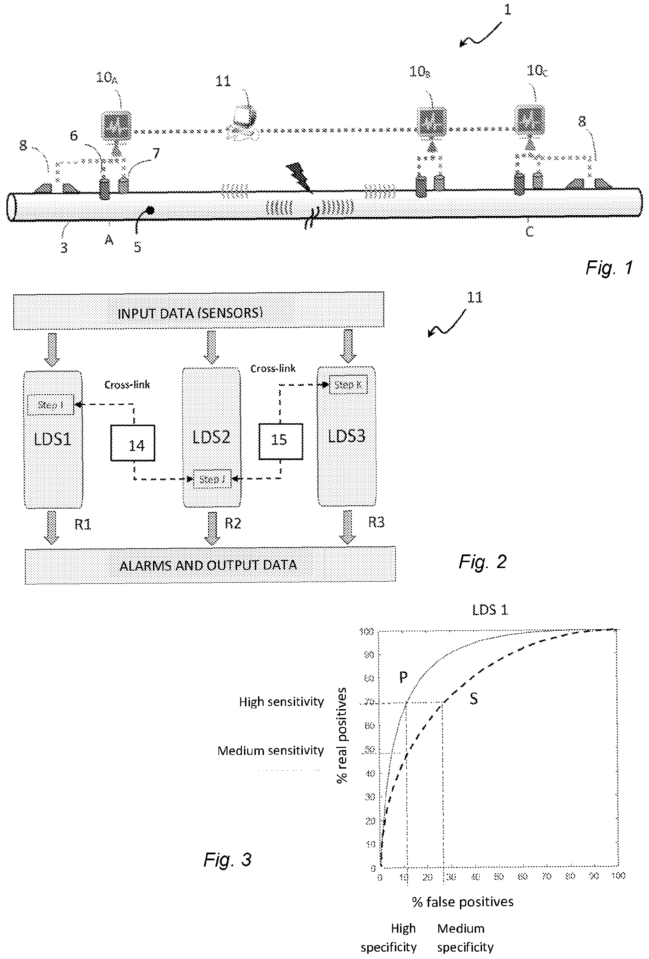

Figure 1 illustrates an integrated system 1 for continuous remote monitoring of a section of pipeline or pipeline 3, in which a fluid 5 is transported pressurized. Three measuring stations, $10_A$, $10_B$ and $10_C$, are associated with the pipeline 3 and spaced by a predefined distance, $D_{AB}$ and $D_{BC}$. Each measuring station $10_A$-$10_C$ is equipped with detection means such as vibroacoustic detection sensors, 6 and 7, schematically illustrated, suitable for continuously measuring elastic and acoustic signals propagating in the pipeline 3 and acoustic signals propagating in the fluid 5. Each measuring station, $10_A$-$10_C$, can be substantially realized as described in International Application No. WO2014096019A1 filed by the Applicant of the present application. Furthermore, in the illustrated embodiment, only the measuring stations, $10_A$ and $10_C$, at the ends of the section AC, comprise a flow meter 8 as a detection means for measuring the real flow rate of the pipeline 3.

Each measuring station, $10_A$-$10_C$, is equipped with a synchronizer having an absolute time reference, for example a GPS system, to synchronize the measurement signals, that are elastic, acoustic and flow signals, which are detected and stored. Then, each measuring station, $10_A$-$10_C$, generates and transmits to a processing unit 11 said synchronized measurement signals.

The processing unit 11 is configured to receive and to store the measurement signals remotely and continuously. The measurement signals are then processed by means of at least two different diagnostic methods for detecting leaks, LDS1 and LDS2. These methods are activated in parallel to each other to determine the respective output data sets, R1 and R2, relating to a possible leak L1 of said fluid 5 in said pipeline 3. The data, R1 and R2, of detection of the leak L1 may be, indicatively and not limited to, a localisation or a position of the leak L1 in the pipeline 3, a subtracted amount of fluid 5, a hole size and/or a time interval of the leak L1.

In the case generalized and illustrated in Figure 2, explained for the detection of the leaks in the section AC of pipeline 3, the diagnostic methods activated in parallel are: a first method LDS1, a second method LDS2 and a third method LDS3.

First data R1, second data R2 and third data R3 relating to and characterizing the leak L1 are defined respectively and separately from the parallel processing.

A first connection 14 and a second connection 15, mono or bi-directional, are configured to transfer data or values between two intermediate processing steps between the first method LDS1 and the second method LDS2 and between the second method LDS2 and the third method LDS3. Suitably, the intermediate processing step precedes the step suitable for defining the data relating to the leak L1.

The first connection 14 and the second connection 15 are configured to compare and/or transfer from one method to another one values associated with at least one parameter determined by the processing sequence of the corresponding method. This at least one parameter being a value associated with a property of said fluid 5 or a value determined during the sequence of processing of said detected signals.

For the first connection 14, mutatis mutandis for the second connection 15, these values are calculated or detected by means of measurement signals and determined by means of the first diagnostic method LDS1 or the second diagnostic method LDS2. The first connection 14 compares values of the same parameter generating an activation signal when it is identified that:

- a first value V1, which is associated with said at least one parameter and is determined by said first diagnostic method LDS1, is different from
- a second value V2, which is associated with said at least one parameter and is determined by said second diagnostic method LDS2 and/or by predefined threshold values.

The activation signal may be, for example:

- a general alarm signal Alert that is sent and processed externally by an end user, or
- a transfer signal that allows transferring the first value V1 or the second value V2, by means of the first connection 14 for reprocessing said measurement signals by means of the first diagnostic method LDS1 or the second diagnostic method LDS2; or
- a reprocessing signal for reprocessing said measurement signals and said diagnostic methods with new predefined threshold values updated as a function of said parameter to compare the parameter again by means of the connection 14.

With the reprocessing of the diagnostic method, activated by an intermediate processing step, the measurement signals and the first value V1 or the second value V2 transferred are processed again generating new data, R1 or R2, characterizing the leak L1 and/or modifying predefined threshold values. Any requests for recalculating or reprocessing of data with new conditions or threshold values allow redefining identified or calculated parameter values. For example, requests for reprocessing data with new threshold conditions may be activated when one of the two diagnostic methods, LDS1 and LDS2 or LDS2 and LDS3 in the case of the second connection 15, succeeds in identifying a predefined scenario for an interval under observation.

Additional sensors, such as temperature sensors, density sensors and others, not illustrated in Figure 1, may be associated with the measuring stations, $10_A$-$10_C$, and the respective measurement signals considered in the process.

Of course, two or more first connections 14 or second connections 15, mono or bi-directional, may be provided for analyzing values of further parameters.

According to one embodiment, the process involves comparing a common parameter processed/calculated by each diagnostic method. Each diagnostic method determining and associating a corresponding reliability value with the common parameter. The reliability value can be defined on the basis of a statistical analysis of respective historical results and/or on statistical sensitivity estimates of the diagnostic method used to define the presence of an anomaly.

The integrated system can analyze the performance of each diagnostic method based on the so-called ROC -Receiver Operating Characteristic- curves.

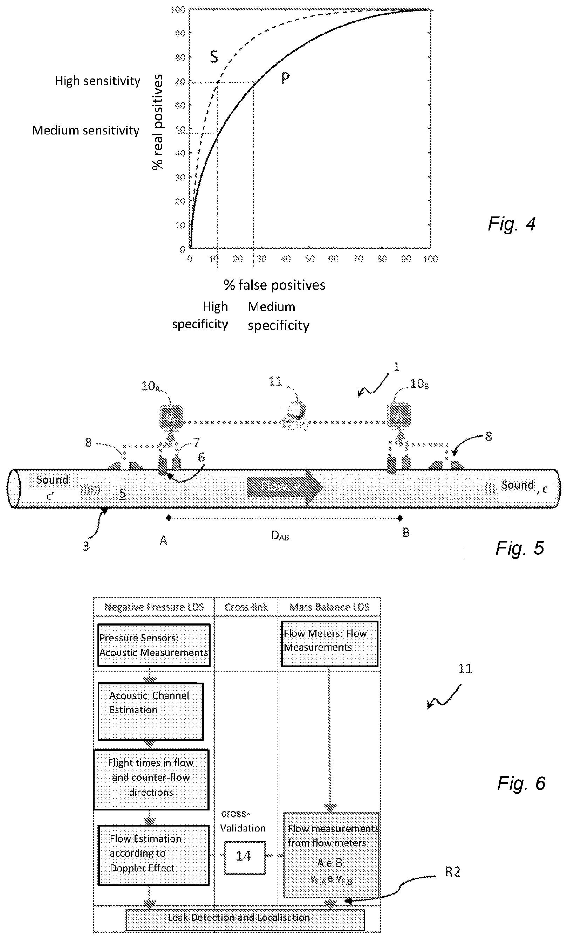

Figures 3 and 4 show the ROC curves in the case where the first method LDS1 is an NP (Negative Pressure) method and the second method LDS2 is MB (Mass Balance). As can be seen from the diagrams, for the pressurized pipeline 3, the two diagnostic methods have different sensitivities and specificities in the shut-in conditions, curve S, and in the pumping conditions, curve P. For the second method MB-LDS2 the shut-in curve S has a higher sensitivity than the pumping curve P, vice versa for the first method NP-LDS1. In this case, therefore, the pressure-correlated parameters have a higher reliability value for the first method NP LDS1 than for the second method MB LDS2 and vice versa for the variables correlated to the shut-in conditions curve S.

Of course, different statistical techniques can be used to define reliability values of the common parameters analyzed.

For instance, machine learning-type techniques, suitably trained through databases of data obtained as a function of historical results, can assign reliability values or diversified uncertainty intervals to the common parameters determined/calculated from intermediate and final steps in each diagnostic method, LDS1-LDS3. Machine learning techniques automatically analyze historical data to obtain experimental relationships between measurements or measurement signals and outputs.

Based on the common parameter processed, the alarm signal comprises one or more signals relating to:

- a warning of drift or malfunction of at least one of the detection sensors, 6 and 7, and/or of the flow meters 8;
- an external measurement signal with predefined threshold values, the measurement signal comprising pumping conditions and/or operating conditions for closing system valves, and/or parameters relating to a real flow rate value with respect to a virtual value.

It was observed that the process and the system for continuous remote monitoring is made more efficient by integrating and transferring the values of parameters that are common between two or more diagnostic methods, LDS1-LDS3. In fact, a cross-check of the data obtained as partial results or intermediate values of the common parameters allows to exploit the different sensitivities between the different diagnostic methods LDS1-LDS3 to obtain more accurate estimates regarding the amount and position of the leak. The greater accuracy obtained allows to reduce the number of false negative results allowing to meet the increasingly stringent requests for safety of the pressurized plants for the benefit of the environment and/or of the production activities.

Some examples of embodiments are described below.

### First embodiment: example 1 *(Fig. 5 and 6)*

The process and the integrated monitoring system are used to verify the operation of the flow meters 8. In example 1 the common parameter is the flow velocity.

Based on the ROC curves illustrated in Figures 3 and 4, the processing unit 11 uses the first method NP-LDS1 and the second method MB-LDS2.

The integrated system 1 comprises two measuring stations, and $10_B$, arranged and spaced by a predefined distance $_{AB}$, each station being equipped with a flow meter 8 in addition to the vibroacoustic sensors 6 and 7. The fluid 5 flows in the pipeline 3 at the flow velocity v in the direction AB. At both ends of the pipeline 3 there are flow regulation devices such as pumps, valves, and fluid movement in the tanks that generate pressure transients. The pressure transients and the noise propagate in the fluid 5 at a sound velocity c in both directions between the two measuring stations, $10_A$ and $10_B$.

The processing unit 11, schematically illustrated in Figure 6, processes by means of the two different diagnostic methods, NP-LDS1 and MB-LDS2, the elastic signals, the acoustic signals and the flow signals detected as measurement signals, transmitted by the measuring stations, $10_A$ and $10_B$, and appropriately stored.

The first method LDS1-NP also performs an estimation of the acoustic channel of the pipeline 3 in the distance $D_{AB}$ by determining the sound velocity c' and an attenuation value. The estimation of the acoustic channel of the pipeline 3 is done using a cross-correlation technique between the acoustic or noise transients that propagate in the pipeline 3 in both directions and measured by the measuring stations, $10_A$ and $10_B$.

Due to the Doppler effect, there is a difference between a first calculated velocity c' - of the fluid 5 in the direction of the flow and in the counter-flow direction or second calculated velocity c- from which a first value V1 is obtained, as a calculated value of the flow velocity $v_{P,AB}$ in the distance $D_{AB}$.

In parallel, the second method MB-LDS2 directly analyzes the measurement signals detected by the flow meters 8 and directly identifies a first detected velocity $v_{F,A}$, at the first measuring station, $10_A$, and a second detected velocity $v_{F,B}$, at the second measuring station, $10_B$. The two detected velocity values allow a second value V2 of the flow velocity to be determined as the detected value $v_{F,AB}$.

The first connection 14 compares the first calculated value V1 with the second detected value V2. If the compared values V1 and V2 differ by a value greater than a predefined threshold value Vs, an alarm signal Alert1 is generated that identifies a potential anomaly of the flow meters 8. The alarm signal Alert1 can identify a calibration request, for example.

On the other hand, if the values V1 and V2 are substantially the same, the good performance of the system 1 and of the flow meters 8 is confirmed.

The precision of the effective value of the flow velocity of the fluid 5 in the pipeline 3 allows for a more accurate leak detection and quantification with considerable advantages in monitoring and detection.

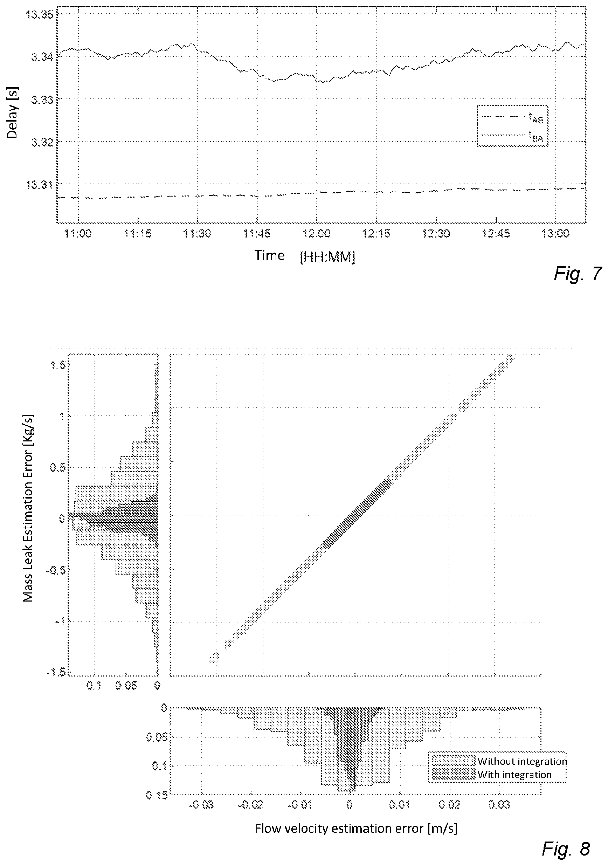

The example in Figure 5 was made using the real data collected on a pipeline 3 for the transport of aircraft fuel with a nominal diameter of 250 mm (10") and a distance $D_{AB}$ of 15640m between the measuring stations. By processing the pressure signals stored in the measuring stations, $10_A$ and $10_B$, with a crosscorrelation analysis, it was possible to obtain the propagation delay of the sound $t_{AB}$ and $t_{BA}$ in the two directions, as illustrated in Figure 7, with the fluid 5 flowing in the direction AB. The values shown in Figure 7 were calculated between 11 a.m. and 1 p.m. on the same day. The difference between the two curves $t_{AB}$ and $t_{BA}$ is due to the Doppler effect, whereas the variability of each curve $t_{AB}$ and $t_{BA}$ is correlated to the changing properties of the fluid 5, because of the changes in temperature and pressure and/or measurement errors.

The average value with the standard deviation of the propagation delays $t_{AB}$ and $t_{BA}$ is:

$$t_{AB} = 13.3078 \pm 0.00078\,s$$

$$t_{BA} = 13.3390 \pm 0.0027\,s$$

The first value V1 or calculated flow rate $v_{P,AB}$ is obtained using the formula:

$$v_{P,AB} = \frac{x_{AB}}{2}\left(\frac{1}{t_{AB}} - \frac{1}{t_{BA}}\right) = 1.37\,m/s \pm 0.1\,\text{m/s}$$

In parallel, with the second method MB-LDS2, the ultrasonic flow meters 8, with an accuracy of $\pm 2\%$ to $\pm 5\%$ of the measured value, directly provide the first detected velocity $v_{F,A}$ and the second detected velocity $v_{F,B}$ equal to:

$$v_{F,A} = 1.44\,m/s \pm 0.03\,\text{m/s}$$

$$v_{F,B} = 1.46\,m/s \pm 0.03\,\text{m/s}$$

The second value V2 or detected flow velocity $v_{F,AB}$ is obtained using the formula:

$$v_{F,AB} = \frac{v_{F,A}+v_{F,B}}{2} = \mathbf{1.45}\,\boldsymbol{m/s} \pm 0.03\text{m/s}$$

Therefore, in summary, the processing block 12 has:

| Method LDS | $v_{AB}$ [m/s] |
|---|---|
| NP-LDS | 1.37 $\pm$ 0.1m/s |
| MB-LDS | 1.45 $\pm$ 0.03m/s |

Given the uncertainties of the measurements, the values shown in the table are considered comparable.

Advantageously, a continuous comparison of the congruence between the first value V1 or value of the calculated flow velocity $v_{P,AB}$ and the second value V2 or value of the detected flow velocity $v_{F,AB}$, determined with different methods LDS, allows to highlight a drift of the calibration of the flow meters 8 in an extremely reduced time.

The measurements based on the correlation times are intrinsically independent of the variations in the properties of the fluid. From the measurements taken with the flow meters 8, although they are also based on the Doppler effect (in the case of ultrasonic flow meters), the value of the mass flow rate of the fluid 5 is determined, using additional parameters that depend on the properties of the fluid. Thus, a possible slow drift between the flow velocity values measured by the first diagnostic method NP-LDS1 and the second diagnostic method MB-LDS2 can be estimated and compensated for, using the first connection 14. This ensures better performance in mass balance estimation even with uncalibrated flow meters 8.

For the sake of completeness, the data relating to an estimate of sensitivity, in the monitoring process in the case of a fluid leak, between the measurement of the mass exiting a leak hole and the flow velocity are illustrated in Figure 8.

Starting from a scenario in which:

| $v_A$B | 1.4 | m/s | Input flow velocity |
|---|---|---|---|
| $\dot{m}_L$ | 1 | kg/s | Fluid leak |

Two situations are considered in which the estimate of the flow velocity of the fluid 5 has a Gaussian distribution and a standard deviation by 10 mm/s in the first case and 2 mm/s in the second case.

The standard deviation $\sigma_{mL}$ of the mass flow rate of the leak can be calculated as a function of the standard deviation of a flow velocity $\sigma_{vA}$, using the formula:

$$\sigma_{\dot{m}_L} = \rho\,A\,\sigma_{v_A}$$

The results are:

|  | $\sigma_{VA}$ [mm/s] | $\sigma_{\dot{m}L}$ [kg/s] |
|---|---|---|
| Case 1 | 10 | 0.44 |
| Case 2 | 2 | 0.087 |

From these data, it is possible to confirm that the accuracy of the estimate of the exiting mass is closely linked to the accuracy of the estimate of the flow velocity of the fluid 5.

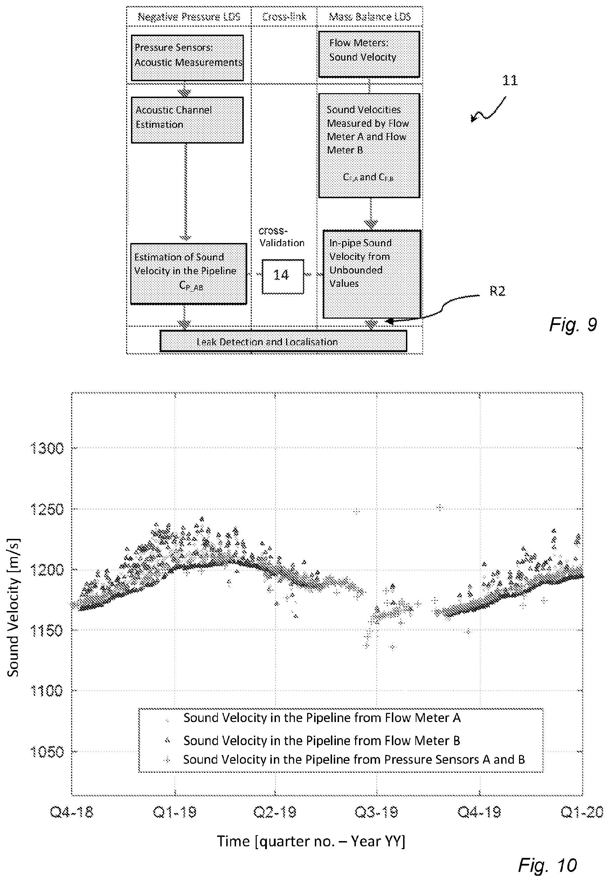

### Second embodiment: example 2 (Fig. 9)

The process and the monitoring system with integrated processing are used for an estimate of the density of the fluid 5 by analyzing the sound velocity. In the present example, as illustrated in Figure 9, the processing unit 11 uses the first diagnostic method NP-LDS1 and the second diagnostic method MB-LDS2. The first connection 14 analyzes the sound velocity as a common parameter. Furthermore, in this example, reference is made to the ROC curves illustrated in Figures 3 and 4.

Similar to the first embodiment, the first method NP-LDS1 estimates the acoustic channel of the pipeline 3 by exploiting the pressure and noise transients that propagate in both directions between the two measuring stations, $10_A$ and $10_B$. Then, the first value V1 of the sound velocity $c'_{P,AB}$ inside the pipeline 3 is calculated using the formula:

$$c'_{P,AB} = \frac{x_{AB}}{2}\left(\frac{1}{t_{AB}} + \frac{1}{t_{BA}}\right) \qquad (1)$$

In parallel, the second diagnostic method MB-LDS2 from each flow meter 8 detects the effective sound velocities, $c_{F,A}$ and $c_{F,B}$, by calculating their mean

$$c_F = [c_{F,B} + c_{F,A}]/2.$$

The effective velocities are the velocities in a free medium that are related to the sound velocity $c'_F$ in the section AB of fluid 5, within the pipeline 3, by the formula:

$$c'_F = \sqrt{\frac{c_F^2}{1 + Kc_F^2}} \qquad (2)$$

Wherein the parameter K is given by:

$$K = \frac{\rho\,D}{h\,E} \qquad (3)$$

E is the Young's modulus of the material of the pipeline 3 which, for steel, is equal to 203 GPa;
h is the thickness of the pipeline 3;

D is the internal diameter of the pipeline 3.

The first connection 14 uses in equation (2) the mean $c_F$ of the detected sound velocities, $c_{F,A}$ and $c_{F,B}$ obtaining the value of the parameter K

$$K = 1.48 \, x \, 10^{-7} \, s^2/m^2$$

Hence, having defined the value of the parameter K, it is possible to calculate the density value of the fluid transported using the formula (3):

$$\rho = \frac{KhE}{D} = 731 \, kg/m^3$$

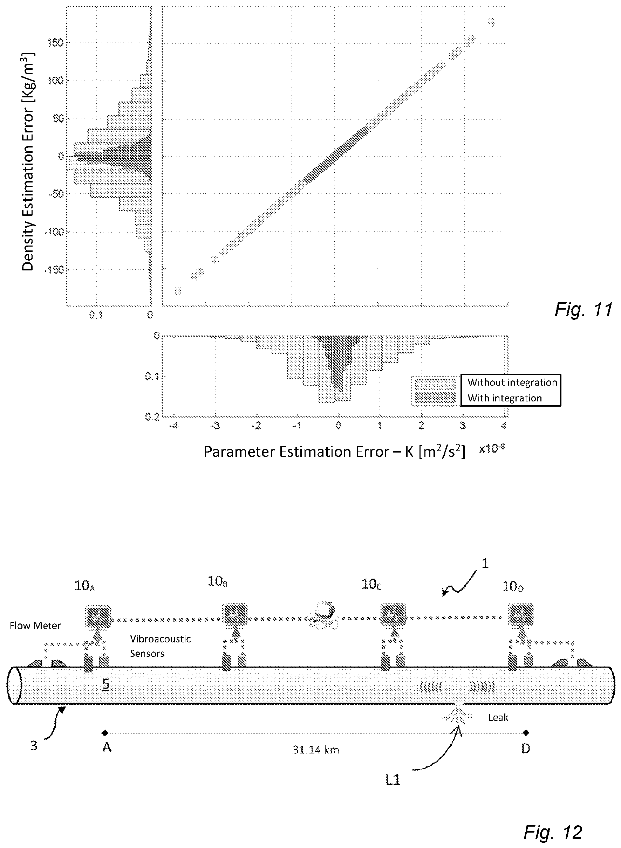

For the sake of completeness, Figure 11 shows an estimate of the sensitivity between the density of the internal fluid 5 and the parameter K, in which two distinct situations are considered in which the estimate of the parameter K has Gaussian distribution and standard deviation by 10 $ns^2/m^2$ in the first case and by 2 $ns^2/m^2$ in the second case.

The standard deviation of the density $\sigma_\rho$ can be calculated as a function of the standard deviation of the parameter K according to the relationship:

$$\sigma_\rho = \frac{\sigma_K hE}{D}$$

and obtaining the following results:

|  | $\sigma_K$ [ns$^2$/m$^2$] | $\sigma_\rho$ [kg/m$^3$] |
|---|---|---|
| Case 1 | 10 | 49 |
| Case 2 | 2.0 | 9.9 |

From these data it is possible to confirm that the accuracy of the fluid density estimate is closely linked to the accuracy of the estimate of the parameter K. The integration of NP-LDS1 and MB-LDS2 at intermediate level through the first connection 14 allows to obtain an accurate, continuous, and real-time experimental measurement of the parameter K.

**Third embodiment: example 3 (Fig. 12-13).**

In the present embodiment, the integrated system 1 has four measuring stations, $10_A$-$10_D$, arranged in a section AD of the pipeline 3, with a total distance $D_{AD}$ of about 31.14Km and spaced by about 10 Km. All measuring stations, $10_A$-$10_D$ are equipped with vibroacoustic signal sensors, 6 and 7, and the measuring stations $10_A$ and $10_D$ at the ends of the distance AD are also equipped with flow meters 8.

The process and the integrated monitoring system are used to verify the presence of a leak L1 of fluid 5 which in the example is localised between two stations $10_C$ and $10_D$.

The signals detected and received by the processing unit 11 are processed continuously and in parallel by means of two diagnostic methods LDS1 and LDS2. The first diagnostic method NP-LDS1 is Negative Pressure, while the second diagnostic method MB-LDS2 is of the Mass Balance type using the RTTM "Real Time Transient Model" technique described in Henrie, Morgan, et al. Pipeline Leak Detection Handbook, Elsevier, 2016.

The first diagnostic method NP-LDS1 analyzes the elastic and acoustic signals detected by the sensors, 6 and 7, of each of the four measuring stations, $10_A$-$10_D$, and determines the first data R1 of detection of the leak L1. The first diagnostic method NP-LDS1 defines a localisation or position of the leak L1 as the first value V1.

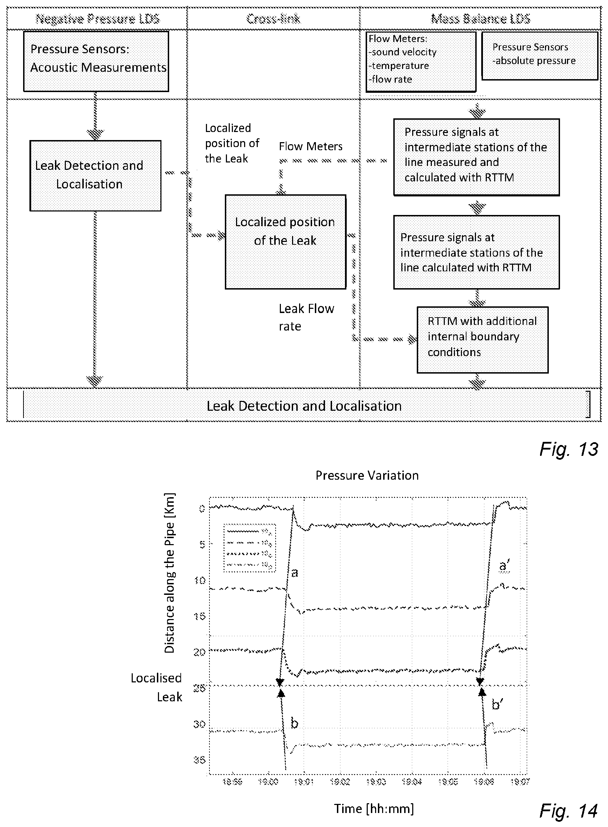

In the graph of Figure 14, the pressure differences detected by each measuring station, $10_A$-$10_D$, following the leak L1 are highlighted with the arrows, a-b and a'-b'.

In parallel, the second method MB-RTTM-LDS2 receives as input the acoustic signals and the flow signals detected by the flow meters 8 of the terminal measuring stations, $10_A$ and $10_D$, and the pressure and temperature values and determines the second data R2 of detection of the leak L1. The flow velocity of the fluid 5 is obtained from the pressure values.

The second diagnostic method MB-RTTM-LDS2 allows to estimate the position of the leak L1 based on the pressure variation produced by the leak L1 and detected by the terminal stations, $10_A$ and $10_D$, of the overall distance $D_{AD}$.

Considering the pressure value as a common parameter, the connection 14 compares the second value V2 or direct value of the pressure measured by the flow meters 8 with the first value V1 or indirect value calculated with the simulated measurement through the first method NP-LDS1.

This connection 14 therefore determines an uncertainty value that generates an activation signal as a reprocessing signal by comparing a further parameter.

Suitably, the first connection 14 allows to share between the first method NP-LDS1 and the second method MB-RTTM-LDS2 two or more parameters correlated to the fluid 5 and correlated to the first data R1 and to the second data R2 of detection of the leak L1. The first data R1 and the second data R2 allow to define scenarios and parameters relating to the possible leakage L1, such as localisation and quantity of the escaped mass of fluid and scenarios such as breakage of the pipeline 3 due to wear and tear or theft by third parties.

In this way, each method can reprocess the stored data and values of the common parameter as a function of specific threshold values, optimizing the common parameters in relation to a scenario identified by the corresponding first data R1 of detection of the leak L1 and second data R2 of detection of the leak L1.

In the present example, the second method MB-RTTM LDS2 defines the localisation of the leak L1 essentially with a kilometre estimation accuracy. This accuracy is extremely low and reduces the reliability of the estimated value of the exiting fluidic mass. Conversely, the localisation of the leak L1 performed by the first diagnostic method NP-LDS1 has a metric precision.

Thus, the reliability value associated with the localisation of the leak L1 of the first diagnostic method NP-LDS1 is greater than the value of the second method MB-RTTM LDS2. Advantageously, therefore, through the first connection 14 the first value V1' of the position estimated by the first method NP-LDS1 is transferred to the second method MB-RTTM LDS2 which reprocesses the values/data and the simulations carried out determining new results R2' by recalculating the position of the leak L1.

Similarly, further common parameter values identified and linked to the leak L1 may be transferred to the first method NP-LDS1, to the second method MB-RTTM-LDS2 in relation to the reliability value.

Specifically in Example 3, the problem of estimating the exiting mass is now better bound and therefore the result obtained is more precise and more reliable. In one embodiment, the value of the mass flow $Q_m(t)$ of the leak as a function of time is calculated according to the formula:

$$Q_m(t) = \frac{dP(t)\,A_p}{c'}$$

wherein: -dP is the pressure difference as a function of the time between the inside and the outside of the pipeline 3;

- $A_P$ is the cross-sectional area of the pipeline 3;
- c' is the measured velocity of the sound inside the pipeline 3.

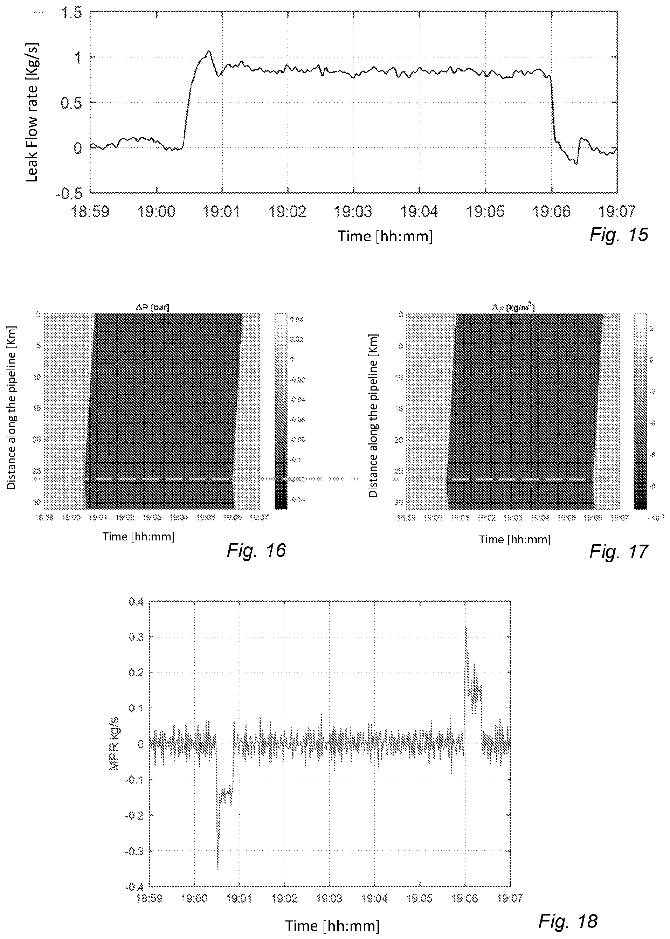

The accurate position of the leak L1 transferred by the connection 14 from the first diagnostic method NP-LDS1 to the second diagnostic method MB-RTTM-LDS2 allows to integrate the process by reprocessing the received signals and the data/values of the transferred parameters improving the results obtained. For example, as indicated in the graph of Figure 16, the representation of the pressure field as a function of time along the overall distance $D_{AD}$ is improved. Furthermore, the representation of the density difference of the fluid 5 as a function of time is also improved, as indicated in the graph of Figure 17. In both representations, the position p1 of the leak L1 is indicated by a dashed line.

In a further embodiment, the connection 14 may transfer from the second method MB-RTTM-LDS2 to the first method NP-LDS1 the value of the MPR or Mass Packing Rate parameter, as illustrated in Figure 18. The parameter MPR allows to provide an estimate of the mass of the leak $m_{leak}$ as a function of the balance mass of the flow MFB, according to the formula:

$$\dot{m}_{leak}(t) = MFB(t) - MPR(t)$$

The graph illustrated in Figure 18 allows highlighting two peaks, one negative and one positive, of the value of the parameter MPR which corroborates and confirms the start and end times of the leak.

The illustrated examples are given for illustrative and non-limiting purposes. Further processes and systems can be realized by processing measurement signals by means of diagnostic methods other than those illustrated. For example, the Acoustic Noise diagnostic method can be used in combination with the Mass Balance diagnostic method and/or the Negative Pressure diagnostic method or others.

An advantage of the process and of the method implemented according to the present invention is linked to the highlighted possibility that the different diagnostic methods exchange, iteratively and in sequence, through one or more connections, the partial results optimized for a defined scenario under examination, and with continuous iterations there is a convergence of the common parameters towards an estimate of the values obtained. These common parameters are therefore consistent with each other and increasingly precise.

The process and the integrated system according to the present invention allow the exchange and verification of results and intermediate information, before the definition of the leak, as well as the possibility of dynamically and adaptively varying the values of the common parameters between the steps of processing each diagnostic method according to the partial results obtained by other diagnostic methods.

A further advantage of the process and of the system according to the present invention is the determination and the cross comparison of the same parameters obtained from different diagnostic methods starting from the same measurement signals. This allows an exchange of data/values and/or information and also signals and functions at an intermediate level with respect to the processing of the alarm, permitting data reprocessing that allows to obtain more reliable estimates of the parameters and of the alarms.

The described process and the system make it possible to significantly reduce the so-called false negative or false positive results, to reprocess dubious events and to take advantage of the best performance associated with each diagnostic method.

## Claims

1. Process for continuous monitoring of a pipeline (3) with transported pressurized fluid (5) that provides for:

  - continuously acquiring measurement signals by means of at least one detection means (6, 7, 8) which is associated with said pipeline (3);

- continuously transmitting said measurement signals to a processing unit (11);
- continuously processing said measurement signals by means of a first diagnostic method (LDS1) for detecting leaks to define a leak (L1) of said fluid (5);

**characterized by**:

- processing said measurement signals in parallel by means of at least a second diagnostic method (LDS2, LDS3) to define said leak (L1);
- providing at least one mono or bidirectional connection (14, 15) between an intermediate processing step of said first diagnostic method (LDS1) and an intermediate processing step of said at least one second diagnostic method (LDS2, LDS3), said intermediate processing step preceding the step suitable to define said leak (L1);
- said at least one connection (14, 15) being configured to compare and/or to transfer a first value (V1) associated with at least one common parameter determined by said first diagnostic method (LDS1) and a second value (V2) associated with said common parameter determined by said at least one second diagnostic method (LDS2, LDS3);
- generating an activation signal when said connection (14, 15) identifies that said first value (V1) is different from said second value (V2) and/or from predefined threshold values;

said activation signal being:

- an alarm signal (Alert), or
- a transfer signal for transferring said first value (V1) or said second value (V2) by means of said connection (14, 15) for reprocessing said measurement signals by means of said first diagnostic method (LDS1) or said at least a second diagnostic method (LDS2, LDS3); or
- a reprocessing signal for reprocessing said measurement signals by means of said first diagnostic method (LDS1) and/or said at least a second diagnostic method (LDS2-LDS3) with said predefined threshold values updated as a function of said common parameter.

2. Process according to claim 1, **characterized by**:

- associating a reliability value to said at least one common parameter;
- correlating said reliability value of said at least one common parameter to said measuring means or to said diagnostic method (LDS1-LDS3) used to determine said at least one common parameter.

3. Process according to claim 2, **characterized in that** said at least one connection (14, 15) provides for:

- comparing a reliability value of said at least one common parameter determined by said first method (LDS1) with a reliability value of said at least one common parameter determined by said at least one second method (LDS2, LDS3); and
- transferring said at least one common parameter with the highest reliability value between said first diagnostic method (LDS1) and said at least one second diagnostic method (LDS2, LDS3).

4. Process according to claim 2, **characterized by** assigning said reliability value of said at least one common parameter on the basis of statistical analyzes (ROC) of respective historical results and/or on statistical sensitivity estimates of said diagnostic method (LDS1- LDS3) and/or by the fact that said statistical sensitivity estimates of said diagnostic method (LDS1-LDS3) use machine learning techniques with training through database of data obtained as a function of historical data or results.

5. Process according to claim 1, **characterized in that** said alarm signal comprises one or more signals relating to:

- a warning of drift or malfunction of at least one of said detection means, said at least one detection means being a vibroacoustic sensor (6, 7) and/or a flow meter (8);
- an external measurement signal with predefined threshold values, said measurement signal comprising pumping conditions and/or operating conditions for closing the system valves, and/or parameters relating to a real flow rate value with respect to a virtual value.

6. Process according to claim 1, **characterized by** providing two or more measuring stations ($10_A$-$10_C$) and at least one corresponding detection means, each measuring station ($10_A$-$10_C$) being configured to receive and synchronize said measurement signals with an absolute time reference and for sending synchronized measurement signals to said processing unit (11).

7. Integrated system for continuous monitoring of a pipeline (3) with transported pressurized fluid (5) which comprise:

- two or more measuring stations ($10_A$-$10_D$) equipped with at least one detection means (6, 7, 8), said two or more measuring stations ($10_A$-$10_D$) being configured to continuously detect measurement signals emitted by said at least one detection means (6,7,8) and for transmitting said detected signals to a processing unit (11);
- said processing unit (11) is configured to process said measurement signals by means of a first diagnostic method (LDS1) in such a way as to define a leak (L1) of said fluid (5);

**characterized in that**:

- said processing unit (11) is further configured to process said measurement signals in parallel by means of at least a second diagnostic method (LDS2, LDS3) to define said leak (L1);
- said processing unit (11) providing at least one mono or bidirectional connection (14, 15) between an intermediate processing step of said first diagnostic method (LDS1) and an intermediate processing step of said at least one second diagnostic method (LDS2, LDS3), said intermediate processing steps preceding the step adapted to define said leak (L1),
- said at least one connection (14, 15) being configured to compare and/or to transfer a first value (V1) associated with at least one common parameter determined by said first diagnostic method (LD1) and a second value (V2) associated with said common parameter determined by said at least one second diagnostic method (LDS2, LDS3),
- said processing unit (11) providing for generating an activation signal when said first value (V1) is different from said second value (V2) and/or from predefined threshold values;

said activation signal being:

- an alarm signal (Alert1), or
- a transfer signal for transferring said first value (V1) or said second value (V2) by means of said connection (14, 15) generating a reprocessing of said measurement signals by means of said first diagnostic method (LDS1) and/or said second method diagnostic (LDS2); or
- a reprocessing signal for reprocessing said measurement signals by means of said first diagnostic method (LDS1) and/or said second diagnostic method (LDS2-LDS3) with said predefined threshold values updated as a function of said common parameter.

8. Integrated system according to claim 7, **characterized in that** said at least one detection means comprises a vibroacoustic sensor (6,7) or a flow meter (8) and/or **in that** said two or more measuring stations ($10_A$-$10_D$) are configured to continuously detect and synchronize said detected measurement signals with an absolute time reference.

9. Integrated system according to claim 7, **characterized in that** said processing unit (11) selects said first diagnostic method (LDS1) and said at least one second diagnostic method (LDS2, LDS3) among a negative pressure wave method (NP), a mass balance (MB) method and an acoustic emissions or acoustic noise method.

10. Integrated system according to claim 7, **characterized in that** said alarm signal (Alert) emitted by said processing unit (11) comprises one or more signals relating to:

- a warning of drift or malfunction of at least one of said detection means, said detection means comprising a detection sensor (6, 7) and/or a flow meter (8);
- an external measurement signal with predefined threshold values, said measurement signal comprising pumping conditions and/or operating conditions for closing the system valves, and/or parameters relating to a real flow rate value with respect to a virtual value.

**Patentansprüche**

1. Verfahren zur kontinuierlichen Überwachung einer Rohrleitung (3) mit transportiertem Druckfluid (5), das Folgendes vorsieht:

- kontinuierliches Erfassen von Messsignalen mittels mindestens einer Detektionsvorrichtung (6, 7, 8), die der Rohrleitung (3) zugeordnet ist;
- kontinuierliches Übertragen der Messsignale an eine Verarbeitungseinheit (11);
- kontinuierliches Verarbeiten der Messsignale mittels eines ersten Diagnoseverfahrens (LDS1) zum Erkennen von Leckagen, um eine Leckage (L1) des Fluids (5) zu definieren;

**gekennzeichnet durch**:

- paralleles Verarbeiten der Messsignale mittels mindestens eines zweiten Diagnoseverfahrens (LDS2, LDS3) zur Definition der Leckage (L1);
- Bereitstellen mindestens einer mono- oder bidirektionalen Verbindung (14, 15) zwischen einem Zwischenverarbeitungsschritt des ersten Diagnoseverfahrens (LDS1) und einem Zwischenverarbeitungsschritt des mindestens einen zweiten Diagnoseverfahrens (LDS2, LDS3), wobei der Zwischenverarbeitungsschritt dem Schritt vorausgeht, der zur Definition der Leckage (L1) geeignet ist;
- wobei die mindestens eine Verbindung (14, 15) so konfiguriert ist, dass sie einen ersten Wert (V1), der mindestens einem durch das erste Diagnoseverfahren (LDS1) ermittelten gemeinsamen Parameter zugeordnet ist, mit einem zweiten Wert (V2), der dem durch das mindestens eine zweite Diagnoseverfahren (LDS2, LDS3) ermittelten gemeinsamen Parameter zugeordnet ist, vergleicht und/oder überträgt;
- Erzeugen eines Aktivierungssignals, wenn die Verbindung (14, 15) feststellt, dass der erste Wert (V1) von dem zweiten Wert (V2) und/oder von vordefinierten Schwellenwerten abweicht;

wobei das Aktivierungssignal eins der Folgenden ist:

- ein Alarmsignal (Alarm) oder
- ein Übertragungssignal zum Übertragen des ersten Wertes (V1) oder des zweiten Wertes (V2) mittels der Verbindung (14, 15) zur Wiederverarbeitung der Messsignale mittels des ersten Diagnoseverfahrens (LDS1) oder des mindestens einen zweiten Diagnoseverfahrens (LDS2, LDS3); oder
- ein Wiederverarbeitungssignal zur Wiederverarbeitung der Messsignale mittels des ersten Diagnoseverfahrens (LDS1) und/oder des mindestens einen zweiten Diagnoseverfahrens (LDS2-LDS3) mit den in Abhängigkeit von dem gemeinsamen Parameter aktualisierten vorgegebenen Schwellenwerten.

2. Verfahren nach Anspruch 1, **gekennzeichnet durch**:

- Zuordnen eines Zuverlässigkeitswerts zu dem mindestens einen gemeinsamen Parameter;
- Korrelieren des Zuverlässigkeitswerts des mindestens einen gemeinsamen Parameters mit der Messvorrichtung oder dem Diagnoseverfahren (LDS1-LDS3), das zur Bestimmung des mindestens einen gemeinsamen Parameters verwendet wird.

3. Verfahren nach Anspruch 2, **dadurch gekennzeichnet, dass** die mindestens eine Verbindung (14, 15) Folgendes vorsieht:

- Vergleichen eines Zuverlässigkeitswerts des mindestens einen gemeinsamen Parameters, der durch das erste Verfahren (LDS 1) bestimmt wurde, mit einem Zuverlässigkeitswert des mindestens einen gemeinsamen Parameters, der durch das mindestens eine zweite Verfahren (LDS2, LDS 3) bestimmt wurde; und
- Übertragen des mindestens einen gemeinsamen Parameters mit dem höchsten Zuverlässigkeitswert zwischen dem ersten Diagnoseverfahren (LDS1) und dem mindestens einen zweiten Diagnoseverfahren (LDS2, LDS3).

4. Verfahren nach Anspruch 2, **dadurch gekennzeichnet, dass** der Zuverlässigkeitswert des mindestens einen gemeinsamen Parameters zugewiesen wird auf der Grundlage statistischer Analysen (ROC) der jeweiligen historischen Ergebnisse und/oder auf der Grundlage statistischer Sensitivitätsschätzungen des Diagnoseverfahrens (LDS1-LDS3) und/oder dadurch, dass die statistischen Sensitivitätsschätzungen des Diagnoseverfahrens (LDS1-LDS3) maschinelle Lernverfahren mit Training anhand einer Datenbank von Daten verwenden, die als Funktion historischer Daten oder Ergebnisse erhalten wurden.

5. Verfahren nach Anspruch 1, **dadurch gekennzeichnet, dass** das Alarmsignal ein oder mehrere Signale umfasst, die sich auf Folgendes beziehen:

- eine Warnung bei Drift oder Fehlfunktion mindestens einer der Detektionsvorrichtung, wobei die mindestens eine Detektionsvorrichtung ein vibroakustischer Sensor (6, 7) und/oder ein Durchflussmesser (8) ist;
- ein externes Messsignal mit vordefinierten Schwellenwerten, wobei das Messsignal Pumpbedingungen und/oder Betriebsbedingungen zum Schließen der Systemventile und/oder Parameter umfasst, die sich auf einen tatsächlichen Durchflusswert in Bezug auf einen virtuellen Wert beziehen.

6. Verfahren nach Anspruch 1, **gekennzeichnet durch** das Bereitstellen zweier oder mehr Messstationen ($10_A$-$10_C$) und mindestens einer entsprechenden Detektionsvorrichtung, wobei jede Messstation ($10_A$-$10_C$) so konfiguriert ist, dass sie die Messsignale empfängt und mit einer absoluten Zeitreferenz synchronisiert und synchronisierte Messsignale an die Verarbeitungseinheit (11) sendet.

7. Integriertes System zur kontinuierlichen Überwachung einer Rohrleitung (3) mit transportiertem Druckfluid (5), das umfasst:

- zwei oder mehr Messstationen ($10_A$-$10_D$), die mit mindestens einer Detektionsvorrichtung (6,7,8) ausgestattet sind, wobei die zwei oder mehr Messstationen ($10_A$-$10_D$) so konfiguriert sind, dass sie die von der mindestens einen Detektionsvorrichtung (6,7,8) ausgesendeten Messsignale kontinuierlich erfassen und die erfassten Signale an eine Verarbeitungseinheit (11) übertragen;
- die Verarbeitungseinheit (11) ist so konfiguriert, dass sie die Messsignale mittels eines ersten Diagnoseverfahrens (LDS1) so verarbeitet, dass ein Leck (L1) des Fluids (5) definiert wird;

**dadurch gekennzeichnet, dass**:

- die Verarbeitungseinheit (11) ferner dazu konfiguriert ist, die Messsignale durch mindestens ein zweites Diagnoseverfahren (LDS2, LDS3) parallel zu verarbeiten, um die Leckage (L1) zu bestimmen;
- wobei die Verarbeitungseinheit (11) mindestens eine mono- oder bidirektionale Verbindung (14, 15) zwischen einem Zwischenverarbeitungsschritt des ersten Diagnoseverfahrens (LDS1) und einem Zwischenverarbeitungsschritt des mindestens einen zweiten Diagnoseverfahrens (LDS2, LDS3) bereitstellt, wobei die Zwischenverarbeitungsschritte dem Schritt zum Definieren der Leckage (L1) vorausgehen,
- wobei die mindestens eine Verbindung (14, 15) so konfiguriert ist, dass sie einen ersten Wert (V1), der mindestens einem durch das erste Diagnoseverfahren (LDS1) ermittelten gemeinsamen Parameter zugeordnet ist, mit einem zweiten Wert (V2), der dem durch das mindestens eine zweite Diagnoseverfahren (LDS2, LDS3) ermittelten gemeinsamen Parameter zugeordnet ist, vergleicht und/oder überträgt,
- wobei die Verarbeitungseinheit (11) dafür sorgt, dass ein Aktivierungssignal erzeugt wird, wenn der erste Wert (V1) von dem zweiten Wert (V2) und/oder von vordefinierten Schwellenwerten abweicht;

wobei das Aktivierungssignal eins der Folgenden ist:

- ein Alarmsignal (Alarm1) oder
- ein Übertragungssignal zum Übertragen des ersten Wertes (V1) oder des zweiten Wertes (V2) mittels der Verbindung (14, 15), das eine Wiederverarbeitung der Messsignale mittels des ersten Diagnoseverfahrens (LDS1) und/oder des zweiten Diagnoseverfahrens (LDS2) auslöst; oder
- ein Wiederverarbeitungssignal zur Wiederverarbeitung der Messsignale mittels des ersten Diagnoseverfahrens (LDS1) und/oder des zweiten Diagnoseverfahrens (LDS2-LDS3) mit den in Abhängigkeit von dem gemeinsamen Parameter aktualisierten vorgegebenen Schwellenwerten.

8. Integriertes System gemäß Anspruch 7, **dadurch gekennzeichnet, dass** die mindestens eine Detektionsvorrichtung einen vibroakustischen Sensor (6, 7) oder einen Durchflussmesser (8) umfasst und/oder dass die zwei oder mehr Messstationen ($10_A$-$10_D$) so konfiguriert sind, dass sie die erfassten Messsignale kontinuierlich erfassen und mit einer absoluten Zeitreferenz synchronisieren.

9. Integriertes System gemäß Anspruch 7, **dadurch gekennzeichnet, dass** die Verarbeitungseinheit (11) das erste Diagnoseverfahren (LDS1) und das mindestens eine zweite Diagnoseverfahren (LDS2, LDS3) aus einem Unterdruckwellenverfahren (NP), einem Massenbilanzverfahren (MB), einem akustischen Emissions- oder einem Geräuschverfahren auswählt.

10. Integriertes System gemäß Anspruch 7 **dadurch gekennzeichnet, dass** das von der Verarbeitungseinheit (11) ausgegebene Alarmsignal (Alarm) ein oder mehrere Signale umfasst, die sich auf Folgendes beziehen:

- eine Warnung bei Drift oder Fehlfunktion mindestens einer der Detektionsvorrichtungen, wobei die Detektionsvorrichtungen einen Detektionssensor (6, 7) und/oder einen Durchflussmesser (8) umfassen;
- ein externes Messsignal mit vordefinierten Schwellenwerten, wobei das Messsignal Pumpbedingungen und/oder Betriebsbedingungen zum Schließen der Systemventile und/oder Parameter umfasst, die sich auf einen tatsächlichen Durchflusswert in Bezug auf einen virtuellen Wert beziehen.

## Revendications

1. Procédé de surveillance continue d'une canalisation (3) avec un fluide sous pression transporté (5) qui permet:

- l'acquisition continue de signaux de mesure au moyen d'au moins un moyen de détection (6, 7, 8) qui est associé à ladite canalisation (3);
- la transmission continue desdits signaux de mesure à une unité de traitement (11);
- le traitement continu desdits signaux de mesure au moyen d'un premier procédé de diagnostic (LDS1) pour la détection de fuites pour définir une fuite (L1) dudit fluide (5);

**caractérisé par**:

- le traitement desdits signaux de mesure en parallèle au moyen d'au moins un second procédé de diagnostic (LDS2, LDS3) pour définir ladite fuite (L1);
- la fourniture d'au moins une connexion mono ou bidirectionnelle (14, 15) entre une étape de traitement intermédiaire dudit premier procédé de diagnostic (LDS1) et une étape de traitement intermédiaire dudit au moins un second procédé de diagnostic (LDS2, LDS3), ladite étape de traitement intermédiaire précédant l'étape appropriée pour définir ladite fuite (L1);

- ladite au moins une connexion (14, 15) étant configurée pour comparer et/ou transférer une première valeur (V1) associée à au moins un paramètre commun déterminé par ledit premier procédé de diagnostic (LDS1) et une seconde valeur (V2) associée audit paramètre commun déterminé par ledit au moins un second procédé de diagnostic (LDS2, LDS3);

- la génération d'un signal d'activation lorsque ladite connexion (14, 15) identifie que ladite première valeur (V1) est différente de ladite seconde valeur (V2) et/ou de valeurs seuil prédéfinies;

ledit signal d'activation étant:

- un signal d'alarme (Alert), ou
- un signal de transfert pour transférer ladite première valeur (V1) ou ladite seconde valeur (V2) au moyen de ladite connexion (14, 15) pour retraiter lesdits signaux de mesure au moyen dudit premier procédé de diagnostic (LDS1) ou dudit au moins un second procédé de diagnostic (LDS2, LDS3); ou
- un signal de retraitement pour le retraitement desdits signaux de mesure au moyen dudit premier procédé de diagnostic (LDS1) et/ou dudit au moins un second procédé de diagnostic (LDS2-LDS3) avec lesdites valeurs seuil prédéfinies mises à jour en fonction dudit paramètre commun.

2.  Procédé selon la revendication 1, **caractérisé par**:

- l'association d'une valeur de fiabilité audit au moins un paramètre commun;
- la corrélation de ladite valeur de fiabilité dudit au moins un paramètre commun auxdits moyens de mesure ou audit procédé de diagnostic (LDS1-LDS3) utilisé(s) pour déterminer ledit au moins un paramètre commun.

3.  Procédé selon la revendication 2, **caractérisé en ce que** ladite au moins une connexion (14, 15) prévoit:

- la comparaison d'une valeur de fiabilité dudit au moins un paramètre commun déterminé par ledit premier procédé (LDS1) à une valeur de fiabilité dudit au moins un paramètre commun déterminé par ledit au moins un second procédé (LDS2, LDS3); et
- le transfert dudit au moins un paramètre commun présentant la valeur de fiabilité la plus élevée entre ledit premier procédé de diagnostic (LDS1) et ledit au moins un second procédé de diagnostic (LDS2, LDS3).

4.  Procédé selon la revendication 2, **caractérisé par** l'attribution de ladite valeur de fiabilité dudit au moins un paramètre commun sur la base d'analyses statistiques (ROC) de résultats historiques respectifs et/ou sur des estimations statistiques de sensibilité dudit procédé de diagnostic (LDS1-LDS3) et/ou par le fait que lesdites estimations statistiques de sensibilité dudit procédé de diagnostic (LDS1-LDS3) utilisent des techniques d'apprentissage automatique avec entraînement par le biais de la base de données de données obtenues en fonction de données ou de résultats historiques.

5.  Procédé selon la revendication 1, **caractérisé en ce que** ledit signal d'alarme comprend un ou plusieurs signaux relatifs à:

- un avertissement de dérive ou de dysfonctionnement d'au moins un desdits moyens de détection, ledit au moins un moyen de détection étant un capteur vibroacoustique (6, 7) et/ou un débitmètre (8);
- un signal de mesure externe avec des valeurs seuil prédéfinies, ledit signal de mesure comprenant des conditions de pompage et/ou des conditions de fonctionnement pour la fermeture des vannes de système, et/ou des paramètres relatifs à une valeur de débit réelle par rapport à une valeur virtuelle.

6.  Procédé selon la revendication 1, **caractérisé par** la fourniture de deux ou plus de deux stations de mesure ($10_A$-$10_C$) et d'au moins un moyen de détection correspondant, chaque station de mesure ($10_A$-$10_C$) étant configurée pour recevoir et synchroniser lesdits signaux de mesure avec une référence temporelle absolue et pour envoyer des signaux de mesure synchronisés à ladite unité de traitement (11).

7.  Système intégré de surveillance continue d'une canalisation (3) avec un fluide sous pression transporté (5) qui comprend:

- deux ou plus de deux stations de mesure ($10_A$-$10_D$) équipées d'au moins un moyen de détection (6, 7, 8), lesdites deux ou plus de deux stations de mesure ($10_A$-$10_D$) étant configurées pour détecter en continu des signaux de mesure émis par lesdits au moins un moyen de détection (6, 7, 8) et pour transmettre lesdits signaux détectés à une unité de traitement (11);
- ladite unité de traitement (11) est configurée pour traiter lesdits signaux de mesure au moyen d'un premier procédé de diagnostic (LDS1) de manière à définir une fuite (L1) dudit fluide (5); **caractérisé en ce que**:

- ladite unité de traitement (11) est en outre configurée pour traiter lesdits signaux de mesure en parallèle au moyen d'au moins un second procédé de diagnostic (LDS2, LDS3) pour définir ladite fuite (L1);

- ladite unité de traitement (11) fournissant au moins une connexion mono ou bidirectionnelle (14, 15) entre une étape de traitement intermédiaire dudit premier procédé de diagnostic (LDS1) et une étape de traitement intermédiaire dudit au moins un second procédé de diagnostic (LDS2, LDS3), lesdites étapes de traitement intermédiaires précédant l'étape adaptée pour définir ladite fuite (L1),

- ladite au moins une connexion (14, 15) étant configurée pour comparer et/ou transférer une première valeur (V1) associée à au moins un paramètre commun déterminé par ledit premier procédé de diagnostic (LD1) et une seconde valeur (V2) associée audit paramètre commun déterminé par ledit au moins un second procédé de diagnostic (LDS2, LDS3),

- ladite unité de traitement (11) prévoyant de générer un signal d'activation lorsque ladite première valeur (V1) est différente de ladite seconde valeur (V2) et/ou de valeurs seuils prédéfinies;

ledit signal d'activation étant:

- un signal d'alarme (Alert1), ou
- un signal de transfert pour transférer ladite première valeur (V1) ou ladite seconde valeur (V2) au moyen de ladite connexion (14, 15) en générant un retraitement desdits signaux de mesure au moyen dudit premier procédé de diagnostic (LDS1) et/ou dudit second procédé de diagnostic (LDS2); ou
- un signal de retraitement pour le retraitement desdits signaux de mesure au moyen dudit premier procédé de diagnostic (LDS1) et/ou dudit second procédé de diagnostic (LDS2-LDS3) avec lesdites valeurs seuil prédéfinies mises à jour en fonction dudit paramètre commun.

8. Système intégré selon la revendication 7, **caractérisé en ce que** ledit au moins un moyen de détection comprend un capteur vibro-acoustique (6, 7) ou un débitmètre (8) et/ou **en ce que** lesdites deux ou plus de deux stations de mesure ($10_A$-$10_D$) sont configurées pour détecter et synchroniser en continu lesdits signaux de mesure détectés avec une référence temporelle absolue.

9. Système intégré selon la revendication 7, **caractérisé en ce que** ladite unité de traitement (11) sélectionne ledit premier procédé de diagnostic (LDS1) et ledit au moins un second procédé de diagnostic (LDS2, LDS3) parmi un procédé d'onde de pression négative (NP), un procédé de bilan massique (MB) et un procédé d'émissions acoustiques ou de bruit acoustique.

10. Système intégré selon la revendication 7, **caractérisé en ce que** ledit signal d'alarme (Alert) émis par ladite unité de traitement (11) comprend un ou plusieurs signaux relatifs à:

- un avertissement de dérive ou de dysfonctionnement d'au moins un desdits moyens de détection, lesdits moyens de détection comprenant un capteur de détection (6, 7) et/ou un débitmètre (8);
- un signal de mesure externe avec des valeurs seuil prédéfinies, ledit signal de mesure comprenant des conditions de pompage et/ou des conditions de fonctionnement pour la fermeture des vannes de système, et/ou des paramètres relatifs à une valeur de débit réelle par rapport à une valeur virtuelle.

Fig. 1

Fig. 2

Fig. 3

High sensitivity

Medium sensitivity

% real positives

% false positives

High specificity    Medium specificity

*Fig. 4*

*Fig. 5*

*Fig. 6*

*Fig. 7*

Flow velocity estimation error [m/s]

*Fig. 8*

| Negative Pressure LDS | Cross-link | Mass Balance LDS |
|---|---|---|
| Pressure Sensors: Acoustic Measurements | | Flow Meters: Sound Velocity |
| Acoustic Channel Estimation | | Sound Velocities Measured by Flow Meter A and Flow Meter B $C_{F,A}$ and $C_{F,B}$ |
| Estimation of Sound Velocity in the Pipeline $C_{P\_AB}$ | cross-Validation 14 | In-pipe Sound Velocity from Unbounded Values |
| Leak Detection and Localisation | | |

*Fig. 9*

*Fig. 10*

*Fig. 11*

Density Estimation Error [Kg/m³]

Parameter Estimation Error – K [m²/s²]   ×10⁻⁸

Without integration
With integration

Flow Meter

Vibroacoustic
Sensors

Leak

31.14 km

A

D

*Fig. 12*

Fig. 13

Pressure Variation

Time [hh:mm]

Fig. 14

Fig. 15

Fig. 16

Fig. 17

Fig. 18

## REFERENCES CITED IN THE DESCRIPTION

### Patent documents cited in the description

- US 8346492 B2, Yang
- US 2013066568 A1, Alonso Julio Roberto
- US 10094732 B2, Linford
- WO 2014096019 A1

### Non-patent literature cited in the description

- American Petroleum Institute. *API*, 2002, 1130
- **MORGAN et al.** Pipeline Leak Detection Handbook. Elsevier, 2016
- SYNERGY IN LEAK DETECTION: COMBINING LEAK DETECTION TECHNOLOGIES THAT USE DIFFERENT PHYSICAL PRINCIPLES. **PETER Y. HAN, P.** ; **KIM, M.** Proceedings of the 2014 10th International Pipeline Conference